# EUROPÄISCHE PATENTSCHRIFT

(11) **EP 1 298 834 B1**
(45) Veröffentlichungstag und Bekanntmachung des Hinweises auf die Patenterteilung: **05.04.2006**
(21) Anmeldenummer: 02020917.7
(22) Anmeldetag: 19.09.2002
(51) Int. Cl.: H04L 9/06, H04N 7/167

(54) **Verfahren und Vorrichtung zum Verschlüsseln und Entschlüsseln von Daten**
Method and apparatus for encrypting and decrypting data
Procédé et dispositif de chiffrement et de déchiffrement des données

(30) Priorität: 29.09.2001 DE 10148415
(43) Veröffentlichungstag der Anmeldung: 02.04.2003
(73) Patentinhaber: Technische Universität Braunschweig, 38106 Braunschweig (DE)
(72) Erfinder: Bunimov, Viktor, 38306 Braunschweig (DE); Waetjen, Dietmar, Prof. Dr., 38112 Braunschweig (DE); Schimmler, Manfred, Prof. Dr., 24232 Schönkirchen (DE)
(74) Vertreter: Bremer, Ulrich

(56) Entgegenhaltungen:
- EP-A- 0 899 956
- US-A- 5 440 640
- US-A- 6 125 183

## Beschreibung

Die Erfindung bezieht sich auf ein Verfahren und eine Vorrichtung zum Verschlüsseln sowie zum Entschlüsseln von Daten und ein Übertragungsverfahren unter Verwendung derartiger Verfahren.

Bei der Übertragung geheimer Daten über unsichere Kanäle werden in der Regel auf der Senderseite die Daten verschlüsselt, die verschlüsselten Daten übertragen, und von dem Empfänger die verschlüsselten Daten wieder entschlüsselt. Hierzu sind verschiedene Verschlüsselungsverfahren bzw. kryptographische Verfahren bekannt:

Klassische kryptographischen Verfahren mit zum Beispiel Transpositionschiffren und einfacheren oder komplexeren Substitutionen haben heute keine praktische Bedeutung mehr, da hierzu in der Regel Angriffstechniken bekannt sind und daher keine hinreichende Sicherheit gegen Entschlüsselung durch Dritte gewährleistet ist.

Bei sogenannten Secret-Key-Verfahren benutzen Sender und Empfänger einen geheimen Schlüssel, der Angreifern nicht bekannt sein darf. Hierbei sind Blockchiffrierungen, Stromchiffrierungen und Chiffrierungen über Hash-Funktionen bekannt. Blockchiffrierungen enthalten symmetrische Algorithmen, die die Ausgangsdaten bzw. den Klartext blockweise bearbeiten, wobei eine feste Blockgröße vorgegeben ist.

Stromchiffrierungen sind symmetrische Verfahren, die den Klartext bitweise oder byteweise bearbeiten, zum Beispiel One-Time-Pad, RC4, SEAL, WAKE, FCSRs. Beim One-Time-Pad-Verfahren wird der Klartext durch Bitvektoren einer Länge 1 wiedergeben, wobei jeder Bitvektor mit einem geheimen Schlüsselvektor einer Länge p größer/gleich 1 verschlüsselt wird. Hierbei wird jeder Datenvektor des Klartextes mit dem Schlüsselvektor bitweise durch EXKLUSIV-ODER (EXCLUSIVE OR) miteinander verknüpft, so daß eine Bitfolge der Länge r ausgegeben wird. Der chiffrierte Text enthält somit eine Folge von Bitvektoren der Länge r und wird an den Empfänger übertragen. Der Empfänger kann die Chiffrevektoren wiederum mit dem Schlüsselvektor bitweise durch EXKLUSIV-ODER verknüpfen und hieraus wiederum die Datenvektoren des Klartextes erhalten. Hierbei wird die mathematische Eigenschaft der EXKLUSIV-ODER-Funktion ausgenutzt, daß die zweimalige EXKLUSIV-ODER-Verknüpfung einer ersten Booleschen Variablen mit einer zweiten Booleschen Variablen wiederum zu der ersten Booleschen Variablen führt, das heißt, die Exklusiv-oder-Verknüpfung zu sich selber invers ist.

Dieses Chiffrierverfahren ist - wie auch andere Stromchiffrierverfahren - sicher, wenn ein hinreichend großer Schlüsselvektor verwendet wird. Hierzu werden üblicherweise Bitvektoren zum Beispiel der Länge r = 65536 Bits verwendet. Bei derartigen Secret-Key-Verfahren sind hohe Datenraten von über einem MByte/s oder auch einem Gbyte/s möglich.

Problematisch ist jedoch insbesondere die Übermittlung des geheimen Schlüssels, den der Empfänger für die Dechiffrierung der Nachricht benötigt. Die Übermittlung und sichere Aufbewahrung des Schlüssels ist somit kryptographisch als Schwachpunkt gegenüber Angriffen Dritter anzusehen, so daß Secret-Key-Verfahren nur begrenzt Verwendung finden.

Weiterhin sind asymmetrische Verfahren, auch als Public-Key-Verfahren bezeichnet, bekannt. Bei diesen Verfahren gibt es einen öffentlichen Schlüssel, der von jedermann zum Verschlüsseln eines Klartextes und Übersenden des verschlüsselten Textes an den Empfänger benutzt werden kann. Der Empfänger hat weiterhin einen privaten Schlüssel, mit dem er die chiffrierte Nachricht dechiffrieren kann. Den privaten Schlüssel kennt nur der Empfänger; er kann bei hinreichender Länge des Schlüssels mit praktisch erreichbarem mathematischen Aufwand auch nicht aus dem öffentlichen Schlüssel hergeleitet werden. Beispiele für asymmetrische Verfahren, die als sicher gelten, sind insbesondere RSA, Rabin, ElGamal, McEliece, Kryptosysteme auf Basis elliptischer Kurven und probabilistische Public-Key-Chiffrierun-gen. Bei letzteren werden zum Chiffrieren Zufallswerte benutzt.

Der Nachteil der Public-Key-Verfahren, insbesondere der probabilistischen Public-Key-Verfahren, ist der hohe Rechenaufwand, der sowohl auf der Sender- als auch auf der Empfängerseite erforderlich ist. Datenraten von einem MByte/s, zum Beispiel bei einer heute als sicher geltenden Schlüssellänge von 1.024 Bit für RSA, sind heute nur mit Spezialhardware möglich; Datenraten von einem GByte/s sind mit heutiger Hardware nicht zu erreichen.

Die US-A-6,125,183 betrifft ein Verfahren zum Verschlüsseln von Daten, bei dem aus einem geheimen Schlüsselinformationsvektor und einer geheimen Matrix ein Schlüsselvektor erzeugt wird, und weiterhin aus einem Datenvektor einer Länge, die gleich der Länge des Schlüsselvektors ist, und dem Schlüsselvektor ein Chiffrevektor mittels eines Verschlüsselungsverfahrens gebildet wird.

Die EP 0 899 956 A2 betrifft ein kryptografisches Verfahren und eine kryptografische Vorrichtung zum Verhindern eines Zugriffs auf einen übertragenen Programminhalt unter Verwendung von Programm-Identifiern. Hierbei wird ein Programm-Identifier mit dem verschlüsselten Programminhalt übertragen und der Zugriff durch ein set-top-terminal oder einen ähnlichen Mechanismus unter Verwendung gespeicherter Schlüssel verhindert.

Der Erfindung liegt die Aufgabe zugrunde, gegenüber dem Stand der Technik Verbesserungen zu schaffen und insbesondere Verfahren zum Verschlüsseln eines Klartextes, Entschlüsseln des Chiffretextes, geeignete Vorrichtungen hierzu sowie ein Übertragungsverfahren unter Verwendung der erfindungsgemäßen Verschlüsselungs- und Entschlüsselungsverfahren zu schaffen, bei denen eine hohe Sicherheit gegen unautorisierten Zugriff durch Dritte gewährleistet ist und dennoch der Rechenaufwand begrenzt ist, so daß auch hohe Datenraten möglich sind und vorteilhafterweise eine Verarbeitung in Echtzeit ermöglicht ist. Hierbei soll die Sicherheit gegen unerlaubten Zugriff vorteilhafterweise mindestens so hoch sein wie bei bekannten Verfahren.

Diese Aufgabe wird gelöst durch ein Verschlüsselungsverfahren nach Anspruch 1, ein Entschlüsselungsverfahren nach Anspruch 6, ein Verfahren zum Übertragen von Daten unter Verwendung dieser Verfahren nach Ansprüch 8 sowie Vorrichtungen zum Durchführen der erfindungsgemäßen Verschlüsselungs- und Entschlüsselungsverfahren nach Anspruch 11 und 14 und ein Computerprogramm nach Anspruch 17. Die Erfindung betrifft somit grundsätzlich auch ein Computerprogrammprodukt.

Der Erfindung liegt der Gedanke zugrunde, einen Klartext unter Verwendung eines geheimen Schlüssels zu verschlüsseln, den Schlüssel jedoch nicht selbst zu übermitteln, sondern nur eine Information minimaler Länge an den Empfänger zu übermitteln, aus der der Schlüssel generiert werden kann. Zu diesem Zweck besitzen Sender und Empfänger als öffentlichen Schlüssel eine Tabelle bzw. Matrix mit p Zeilen und r Spalten (oder umgekehrt), deren Elemente zufällig ermittelte einzelne Bits sind.

Zur Verschlüsselung wird hierbei vom Sender in einem ersten Schritt der Schlüssel der größeren Länge aus dieser Tabelle unter Verwendung der Schlüsselinformation erzeugt und nachfolgend mit Hilfe des so gewonnen Schlüssels ein erstes Verschlüsselungsverfahren angewendet. Dieses Verschlüsselungsverfahren kann insbesondere eine Stromchiffrierung, zum Beispiel das One-Time-Pad-Verfahren sein, das eine hohe Sicherheit gegen Dechiffrierung ohne Kenntnis des Schlüssels bei hoher Verschlüsselungsgeschwindigkeit ermöglicht. Erfindungsgemäß wird der Klartext hierfür in Datenvektoren einer dritten Länge, die kleiner/gleich der großen Länge ist, unterteilt, die direkt mit dem Schlüssel der größeren Länge verschlüsselt werden können. Die dritte Länge entspricht vorteilhafterweise im Regelfall der großen Länge; es können jedoch z.B. restliche Bits auch in kleineren Datenvektoren aufgenommen werden oder die Datenvektoren entsprechend mit Nullen aufgefüllt werden. Die Unterteilung der Daten in Datenvektoren und deren jeweilige Verknüpfung mit dem Schlüsselvektor kann z.B. auch erfolgen, indem die Bitfolge der Daten fortlaufend mit einer Bitfolge aus aneinandergereihten Schlüsselvektoren verknüpft wird, ohne dass einzelne Datenvektoren explizit gebildet und zwischengespeichert werden.

Die relativ kleine Schlüsselinformation kann hierbei mit einem sicheren, etwas rechenaufwendigeren zweiten Verschlüsselungsverfahren, zum Beispiel einem Public-Key-Verfahren wie RSA, verschlüsselt und an den Empfänger übertragen werden. Da die Schlüsselinformation eine geringere Länge als der für das erste Verschlüsselungsverfahren verwendete Schlüssel aufweist, ist der Rechenaufwand des Ver- und Entschlüsselns der Schlüsselinformation begrenzt. Der Empfänger gewinnt aus der Schlüsselinformation und der öffentlichen Tabelle wiederum den Schlüssel und kann hierdurch unter Verwendung eines zweiten Entschlüsselungsverfahrens den Klartext gewinnen.

Bei der zufällig erzeugten Tabelle bzw. Matrix können als einschränkendes Kriterium eine paarweise Gleichheit und das Auftreten von Null-Vektoren ausgeschlossen werden, um die Sicherheit zu erhöhen. Weiterhin kann bei der Erzeugung des Schlüsselinformationsvektors als einschränkendes Kriterium angesetzt werden, dass die Anzahl von Nullen und Einsen in etwa gleich ist, z.B. durch Ansetzen einer oberen und unteren Grenze für Nullen bzw. Einsen um den Mittelwert (p/2).

Erfindungsgemäß kann gegenüber einem herkömmlichen Secret-Key-Verfahren eine erhebliche Reduzierung des Rechenaufwandes erreicht werden, da zur Übertragung des geheimen Schlüssels lediglich die relativ kleine Schlüsselinformation übertragen werden muß. Sie kann somit durch ein rechenaufwendiges und sicheres Verfahren mit hoher Sicherheit verschlüsselt werden. Hierbei kann zum Beispiel eine Schlüsselinformation mit 256 Bit zur Identifizierung eines Schlüssels mit 65.53G Bit verwendet werden.

Die Generierung des Schlüssels der großen Länge r aus der Schlüsselinformation der kleinen Länge p und der pxr-Matrix kann zum Beispiel erfolgen, indem der Sender aus den Zahlen 0 bis p-1 zufällig t Zahlen auswählt, wobei zum Beispiel t = p/2 ist. Die Zeilen der Tabelle, die diesen Zahlen entsprechen, werden bitweise durch exklusives Oder zu einer Bitfolge r verknüpft, wodurch der Schlüsselvektor gewonnen wird. Alternativ zu diesem Verfahren sind grundsätzlich erfindungsgemäß auch etwas abgewandelte Verfahren möglich, zum Beispiel durch Anwendung der inversen Funktion auf den so gewonnen Schlüsselvektor. Der Bitvektor, der die t Zahlen identifiziert, wird als Schlüsselinformationsvektor durch das zweite Verschlüsselungsverfahren verschlüsselt und an den Empfänger übertragen.

Die Berechnungen des Schlüsselvektors aus Schlüsselinformationsvektor und Tabelle bzw. Matrix können insbesondere auch zumindest teilweise hardwaremäßig ausgeführt werden, indem die einzelnen Stellen des Schlüsselvektors durch eine geeignete Hardwareschaltung aus den Stellen der Matrix und des Schlüsselinformationsvektors berechnet werden. Auch die EXKLUSIV-ODER-Verknüpfung von Datenvektor und Schlüsselvektor beim Sender bzw. Chiffrevektor und Schlüsselvektor beim Empfänger kann durch geeignete Hardware durchgeführt werden, so daß ein schnell durchführbares Verfahren geschaffen wird, das dennoch eine hohe Sicherheit gewährleistet. Somit kann ein sehr sicheres, aber langsames zweites Verschlüsselungsverfahren für die Schlüsselinformation mit dem schnellen ersten Verschlüsselungsverfahren für den Klartext verbunden werden.

Erfindungsgemäß kann auf vorteilhafte Weise die Schlüsselinformation als Teil des Klartextes mitverschlüsselt und übertragen werden. Somit muß lediglich bei der ersten Datenübertragung vom Sender an den Empfänger die Schlüsselinformation mittels des zweiten Verschlüsselungsverfahrens verschlüsselt, übertragen und anschließend wieder entschlüsselt werden. Bei dem nachfolgenden Verschlüsselungsverfahren kann die zuvor in Klartext übermittelte Schlüsselinformation vom Empfänger zur Entschlüsselung der Chiffrierdaten verwendet werden, so daß der Aufwand des Ver- und Entschlüsselns der Schlüsselinformation verringert ist. Hierbei kann insbesondere sukzessive jeweils vom Sender im Klartext eine neue Schlüsselinformation mitgeteilt werden, aus der der Empfänger jeweils für die Entschlüsselung der nachfolgenden Chiffrierdaten eine neue Schlüsselinformation gewinnen kann, wobei jeweils die gleiche öffentliche Tabelle verwendet werden kann, ohne hierbei Nachteile in der Sicherheit in Kauf nehmen zu müssen. Bei dieser bevorzugten Weiterbildung sind somit höchste Datenraten ohne Einbuße an Sicherheit möglich.

Die Erfindung wird im folgenden anhand der beiliegenden Zeichnungen an einigen Ausführungsformen näher erläutert. Es zeigen:
- Fig. 1: ein Beispiel einer Zufallsmatrix für das erfindungsgemäße Verschlüsselungs- und Entschlüsselungsverfahren;
- Fig. 2: den Schritt der Erzeugung eines Schlüssels aus Matrix und Schlüsselinformation;
- Fig. 3: den Schritt der Verschlüsselung des Klartextes mittels des Schlüssels;
- Fig. 4: die an den Empfänger übertragenen Daten;
- Fig. 5: den Schritt der Entschlüsselung der Chiffrierdaten beim Empfänger;

- Fig. 6: die Übertragung einer neuen Schlüsselinformation gemäß einer Ausführungsform der Erfindung;
- Fig. 7: ein Blockschaltbild einer Sendervorrichtung und Empfängervorrichtung gemäß einer Ausführungsform der Erfindung.
- Fig. 8: ein Blockschaltbild einer Sendervorrichtung und Empfängervorrichtung gemäß einer weiteren Ausführungsform der Erfindung.

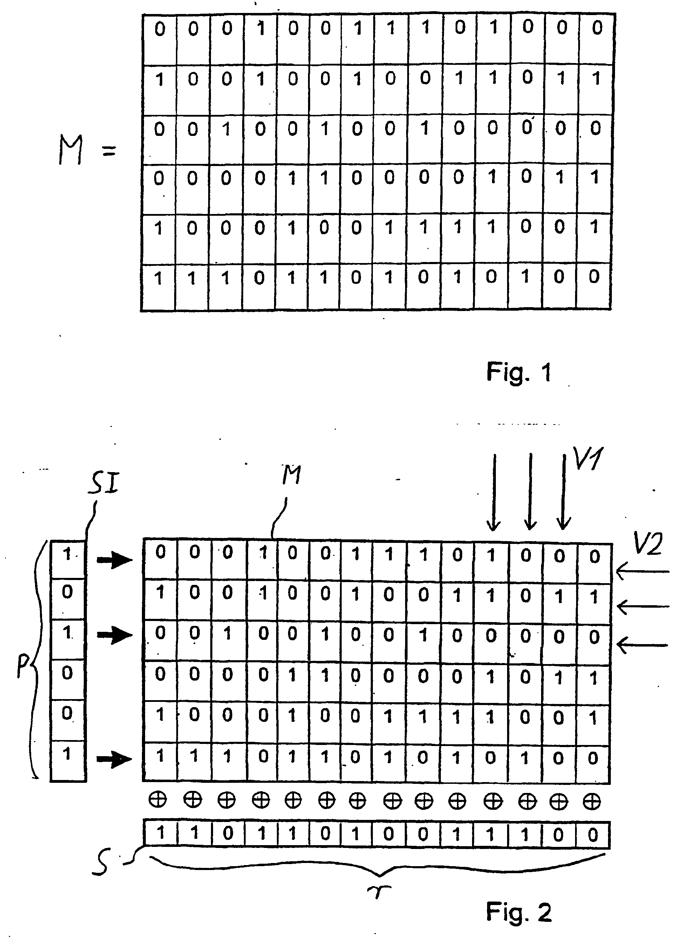

Fig. 1 zeigt eine Zufallsmatrix M, deren Elemente Mᵢⱼ mit i = 1 ..., p = 6 und j = 1 ..., r = 14 jeweils ein durch einen Zufallsgenerator erzeugtes Bit sind. Als Ausschlußkriterium für die Wahl einer Matrix kann hierbei vorgegeben sein, daß die Spaltenvektoren (kleine Matrixvektoren) jeweils ungleich sind und zum Beispiel kein Null-Vektor auftritt.

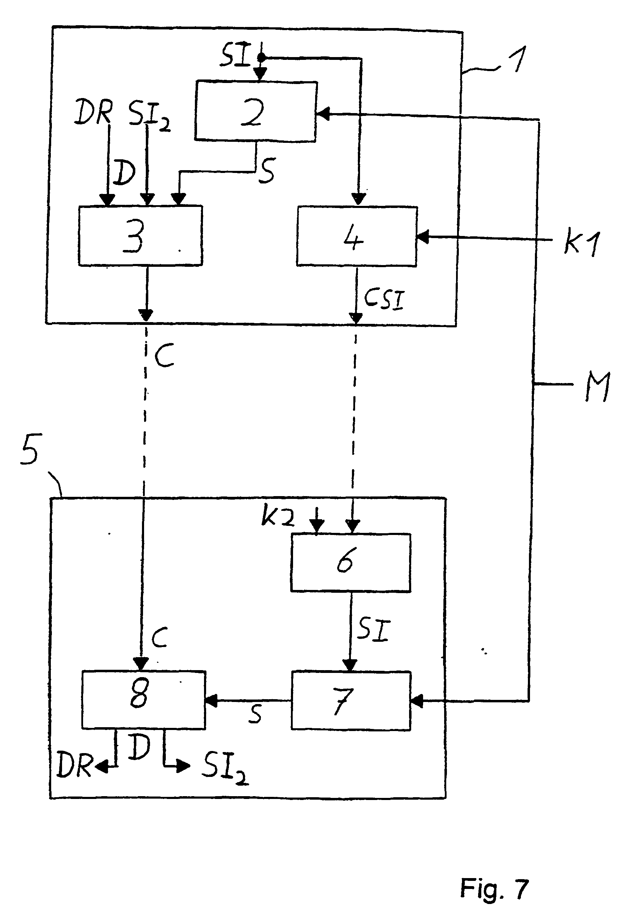

Gemäß Fig. 7 weist ein Empfänger 1 eine Schlüsselberechnungseinrichtung 2, eine erste Verschlüsselungseinrichtung 3 und eine zweite Verschlüsselungseinrichtung 4 auf. Der Sender 1 wählt einen Schlüsselinformationsvektor SI als p-stelligen Bitvektor aus. Dies kann wiederum über einen Zufallsgenerator erfolgen; der Schaffung dieses Schlüsselinformationsvektors entspricht die Auswahl t unterschiedlicher Zeilen der p-zeiligen Matrix M gemäß Fig. 2, wobei bei Auswahl einer Zeile - gemäß Fig. 2 der ersten, dritten und sechsten Zeile - die jeweilige Stelle des Bitvektors SI auf 1 und die restlichen Stellen auf 0 gesetzt werden.

Die Schlüsselberechnungseinrichtung 2 berechnet aus dem geheimen 6-stelligen Schlüsselinformationsvektor SI und der öffentlichen 6 x 14-Matrix M einen 14-stelligen geheimen Schlüsselvektor S als 14-stellige Binärzahl, was in Fig. 2 detaillierter erläutert ist. Die Stellen des 6-stelligen Schlüsselinformationsvektors SI zeigen die für die Bestimmung des Schlüsselvektors S relevanten Zeilen der Matrix M an. Die so ermittelten 14-stelligen Zeilenvektoren werden bitweise durch die Exklusiv-Oder-Funktion miteinander verknüpft, so daß bei Verknüpfung einer geradzahligen Anzahl von Einsen eine Null und bei Verknüpfung einer ungeradzahligen Anzahl von Einsen eine Eins in der entsprechenden Stelle des 14-stelligen Schlüsselvektors S steht. Diese Berechnung entspricht somit einer Matrizenmultiplikation der 6 x 14-Matrix mit dem 6-stelligen Vektor SI zu dem 14-stelligen Vektor S, wobei als Multiplikation der Elemente die UND-Verknüpfung und für die Addition der so gebildeten Faktoren die Exklusiv-Oder-Funktion (die einem Halbaddierer entspricht) verwendet wird.

Der so gewonnene Schlüsselvektor S wird gemäß Fig. 7 zusammen mit einem (aus Bestandteilen DR und SI₂ bestehenden) Datenvektor D der Länge r = 14 einer ersten Verschlüsselungseinrichtung 3 eingegeben, in der diese durch bitweises Verknüpfen mittels der Exklusiv-Oder-Funktion zu einem r = 14-stelligen Chiffriervektor C verbunden werden. Diese Verknüpfung entspricht somit dem One-Time-Pad-Verfahren.

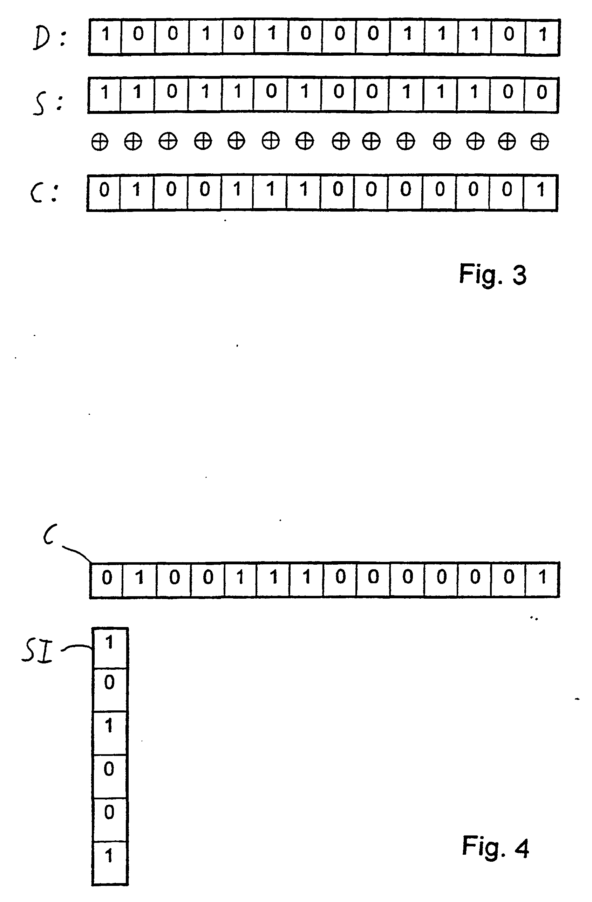

Gemäß Fig. 7 wird der Schlüsselinformationsvektor SI weiterhin in einer zweiten Verschlüsselungseinrichtung 4 mit einem öffentlichen Schlüssel K1, der zum Beispiel einem RSA-Verfahren oder anderen Public-Key-Verfahren entnommen sein kann, verschlüsselt. Der so verschlüsselte Schlüsselinformationsvektor CSI wird nachfolgend - zusammen mit dem Chiffriervektor C - von dem Sender 1 über einen Übertragungskanal zu dem Empfänger 5 weitergegeben. Die somit an den Empfänger 5 übermittelten Daten sind in Fig. 4 wiedergeben, wobei hier der Schlüsselinformationsvektor unverschlüsselt gezeigt ist.

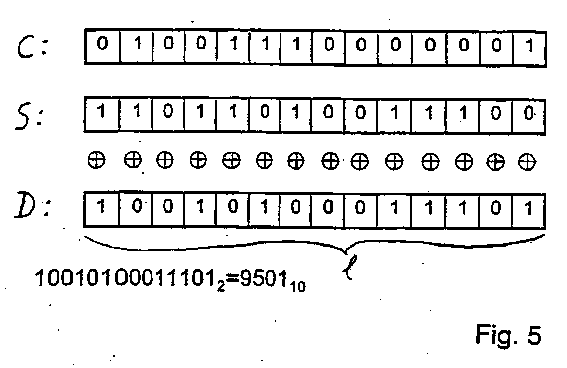

Der Empfänger entschlüsselt zunächst mittels seines privaten Schlüssels K2 den verschlüsselten Schlüsselinformationsvektor CSI in einer zweiten Entschlüsselungseinrichtung 6 und bildet in der Schlüsselberechnungseinrichtung 7 - die der Schlüsselberechnungseinrichtung 2 entsprechen kann - aus dem Schlüsselinformationsvektor und der öffentlichen Matrix M den Schlüsselvektor S. Aus dem Schlüsselvektor S und dem Chiffriervektor C wird in der ersten Entschlüsselungseinrichtung 8 gemäß dem in Fig. 5 gezeigten Verfahren wiederum der Datenvektor D (mit seinen Bestandteilen DR und SI₂) gewonnen. Hierbei wird der r-stellige Datenvektor D wieder durch bitweise Verknüpfung des Chiffriervektors C und des Schlüsselvektors S gemäß dem in Fig. 3 gezeigten Verfahren gewonnen und ggf. durch Umrechnung als Dezimalzahl - hier die Dezimalzahl 9501 - ausgegeben.

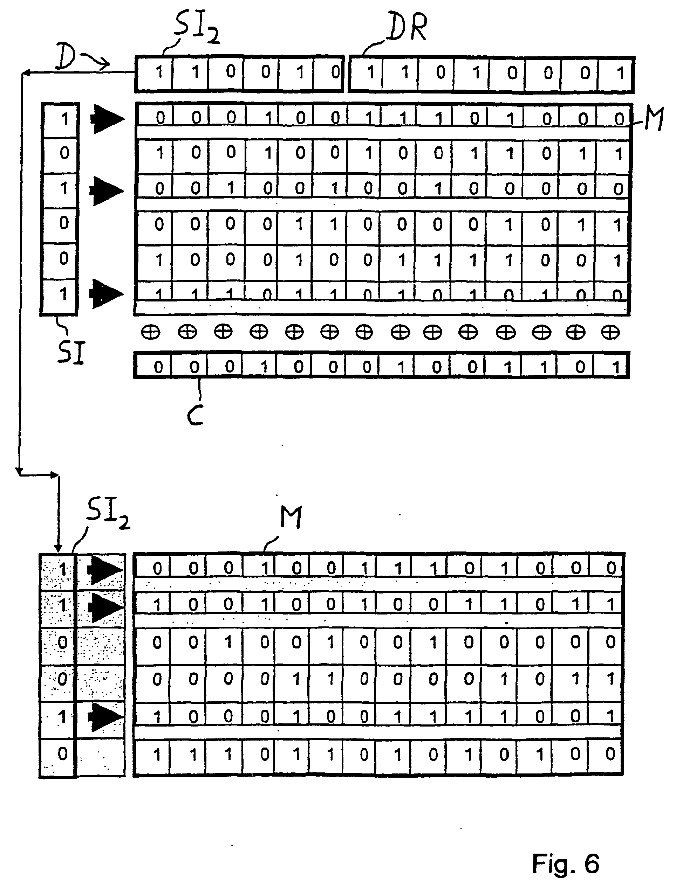

In Fig. 6 ist zur Vereinfachung direkt die Erzeugung des Chiffriervektors C aus einer Verknüpfung des Datenvektors D und der relevanten Zeilen der Matrix M ohne eine Darstellung des Schlüsselvektors S gezeigt. Gemäß Fig. 6 kann in den übertragenen Klartextdaten ein zweiter Schlüsselinformationsvektor SI₂ als Teil des Datenvektors D übertragen werden. Der zweite Schlüsselinformationsvektor SI₂ kann dann gemäß der unteren Hälfte der Fig. 6 beim nachfolgenden Verschlüsselungsverfahren zur Erzeugung eines neuen - zweiten - Schlüssels S₂ mittels der Matrix M verwendet werden, so dass bei dem nachfolgenden Verfahren in Abwandlung zu Fig. 7 keine zweite Verschlüsselungseinrichtung 4 und zweite Entschlüsselungseinrichtung 6 mehr benötigt werden.

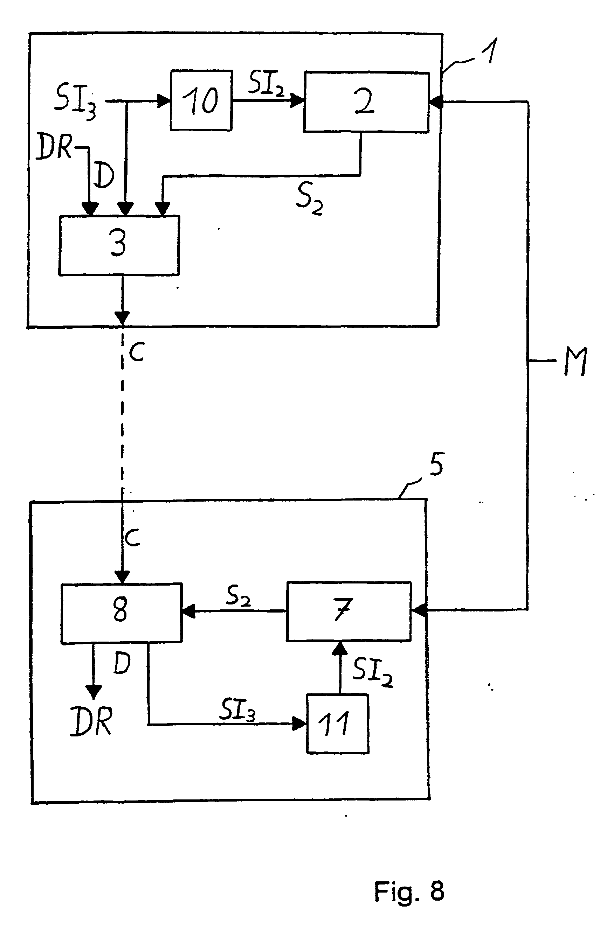

Dies ist in Fig. 8 detaillierter dargestellt. Der bei dem ersten Verfahren von Fig. 7 übertragene zweite Schlüsselinformationsvektor SI₂ ist in einem Schlüsselinformationsspeicher 10 gespeichert und wird für den nächsten Verschlüsselungsvorgang der Schlüsselberechnungseinrichtung 2 eingegeben, die in oben beschriebener Weise einen zweiten Schlüssels S₂ berechnet und an die Verschlüsselungseinrichtung 3 weitergibt. Weiterhin wird z.B. durch einen Zufallsgenerator ein dritter Schlüsselinformationsvektor SI₃ erzeugt, der zum einen in dem Schlüsselinformationsspeicher 10 für das nächste Verfahren gespeichert und zum anderen mit einem Datenrest DR als neuer Datenvektor D der Verschlüsselungseinrichtung 3 eingegeben wird, die einen neuen Chiffriervektor C berechnet und an den Empfänger 5 sendet.

In dem Empfänger 5 wird aus einem Schlüsselinformationsspeicher 11 der zweite Schlüsselinformationsvektor SI₂ ausgelesen, in der Schlüsselberechnungseinrichtung 7 aus der Matrix M und SI₂ der zweite Schlüssel S₂ berechnet und an die Entschlüsselungseinrichtung ausgegeben. Die Entschlüsselungseinrichtung 8 berechnet aus C und S₂ den Datenvektor D, wobei dessen Datenrest DR als Klartext gelesen werden kann und der dritte Schlüsselinformationsvektor SI₃ dem Schlüsselinformationsspeicher 11 für das nächst Verfahren eingegeben wird. Die Schlüsselinformationsspeicher 10 und 11 können hierbei z.B. als Register ausgebildet sein.

Dieses Verfahren kann bei jeder Datenübertragung wiederholt werden, so dass der Schlüsselvektor sukzessive geändert wird, wodurch ein unberechtigtes Entschlüsseln zumindest erschwert wird.

## Patentansprüche

1. Verfahren zum Verschlüsseln von Daten, bei dem
aus einem geheimen Schlüsselinformationsvektor (SI) einer ersten Länge (p) und einer Matrix (M) ein Schlüsselvektor (S) einer zweiten Länge (r) erzeugt wird, und
aus einem Datenvektor (D) einer dritten Länge (I), die kleiner oder gleich der zweiten Länge (r) ist, und dem Schlüsselvektor (S) ein Chiffrevektor (C) mittels eines ersten Verschlüsselungsverfahrens gebildet wird,
wobei
die erste Länge (p) des Schlüsselinformationsvektors (SI) kleiner als die zweite Länge (r) des Schlüsselvektors (S) ist,
die Matrix (M) öffentlich ist,
die Matrix (M) eine Höhe und Breite der ersten und zweiten Länge (r, p) mit kleinen Matrixvektoren (V1) der kleinen ersten Länge (p) und großen Matrixvektoren (V2) der großen zweiten Länge (r) aufweist, deren Elemente (Mᵢⱼ) zufällig erzeugte Bits sind, und
durch den Schlüsselinformationsvektor (SI) festgelegt wird, welche der großen Matrixvektoren (V2) für die Ermittlung des Schlüsselvektors (S) verwendet werden, indem die kleinen Matrixvektoren (V1) bitweise mit dem Schlüsselinformationsvektor (SI) multipliziert werden und aus den durch diese Multiplikationen gebildeten Werten durch eine EXKLUSIV-ODER-Verknüpfung die Stellen des Schlüsselvektors (S) gebildet werden.

2. Verfahren nach Anspruch 1, **dadurch gekennzeichnet, dass** die kleinen Matrixvektoren (V1), vorzugsweise auch die großen Matrixvektoren (V2), ungleich und von Null verschieden sind.

3. Verfahren nach einem der vorherigen Ansprüche, **dadurch gekennzeichnet, dass** das erste Verschlüsselungsverfahren ein symmetrisches Verschlüsselungsverfahren, vorzugsweise ein Stromchiffrierverfahren ist, bei dem die Elemente des Schlüsselvektors (S) und des Datenvektors (D) miteinander verknüpft werden.

4. Verfahren nach Anspruch 3, **dadurch gekennzeichnet, dass** bei dem ersten Verschlüsselungsverfahren aus jeweils einem Element des Schlüsselvektors (S) und des Datenvektors (D) durch eine EXKLUSIV-ODER-Verknüpfung ein Element des Chiffrevektors (C) ermittelt wird.

5. Verfahren nach einem der vorherigen Ansprüche, **dadurch, gekennzeichnet, dass** der Schlüsselinformationsvektor (SI) durch ein zweites Verschlüsselungsverfahren, vorzugsweise ein asymmetrisches Verschlüsselungsverfahren, zum Beispiel ein RSA-Verfahren, verschlüsselt wird.

6. Verfahren zum Entschlüsseln von Chiffrierdaten, die durch ein Verfahren nach einem der vorherigen Ansprüche gebildet worden sind, bei dem
aus einem Schlüsselinformationsvektor (SI) einer ersten Länge (p) und einer Matrix (M) ein Schlüsselvektor (S) einer zweiten Länge (r) gebildet wird, und aus einem Chiffrevektor (C) der großen zweiten Länge (r) und dem Schlüsselvektor (S) mittels eines ersten Entschlüsselungsverfahrens ein Datenvektor (D) der großen zweiten Länge (r) gebildet wird,
wobei
die erste Länge (p) des Schlüsselinformationsvektors (SI) kleiner als die zweite Länge (r) des Schlüsselvektors (S) ist,
die Matrix (M) öffentlich ist,
die Matrix (M) eine Höhe und Breite der ersten und zweiten Länge (r, p) mit kleinen Matrixvektoren (V1) der kleinen ersten Länge (p) und großen Matrixvektoren (V2) der großen zweiten Länge (r) aufweist, deren Elemente (Mᵢⱼ) zufällig erzeugte Bits sind, und
durch den Schlosselinformationsvektor (SI) festgelegt wird, welche der großen Matrixvektoren (V2) für die Ermittlung des Schlüsselvektors (S) verwendet werden, indem die kleinen Matrixvektoren (V1) bitweise mit dem Schlüsselinformationsvektor (SI) multipliziert werden und aus den durch diese Multiplikationen gebildeten Werten durch eine EXKLUSIV-ODER-Verknüpfung die Stellen des Schlüsselvektors (S) gebildet werden.

7. Verfahren nach Anspruch 6, **dadurch gekennzeichnet, dass** das erste Entschlüsselungsverfahren dem ersten Verschlüsselungsverfahren entspricht und eine Verknüpfung der Elemente des Schlüsselvektors (S) und des Chiffrevektors (C) durch eine EXKLUSIV-ODER-Verknüpfung zu den Elementen des Datenvektors (D) beinhaltet.

8. Verfahren zum verschlüsselten Übertragen von Daten von einem Sender (1) zu einem Empfänger (5), bei dem
der Sender (1) aus Datenvektoren (D), einem Schlüsselinformationsvektor (SI) und einer öffentlichen Matrix (M) Chiffrevektoren (C) durch ein Verfahren nach einem der Ansprüche 1 bis 5 erzeugt,
die Chiffrevektoren (C) und der Schlüsselinformationsvektor (SI) zu einem Empfänger (5) übermittelt werden, und
der Empfänger (5) die Chiffrevektoren (C) aus der öffentlichen Matrix (M) und dem Schlüsselinformationsvekior (SI) durch ein Verfahren nach Anspruch 6 oder 7 entschlüsselt.

9. Verfahren nach Anspruch 8, **dadurch gekennzeichnet, dass** der Schlüsselinformationsvektor (S1) von dem Sender mittels eines öffentlichen Schlüssels (K1), zum Beispiel eines asymmetrischen Verschlüsselungsverfahrens, verschlüsselt und der verschlüsselte Schlüsselinformationsvektor (CSI) zu dem Empfänger (5) übertragen wird, und der Empfänger (5) aus dem verschlüsselten Schlüsselinformationsvektor (CSI) mittels eines privaten Schlüssels (K2) aus den verschlüsselten Signalinformationssignalen (CSI) den Schlüsselinformationsvektor (SI) gewinnt.

10. Verfahren nach Anspruch 8 oder 9, **dadurch gekennzeichnet, dass** in den übertragenen Datenvektoren (D) ein zweiter Schlüsselinformationsvektor (SI₂) enthalten ist, der bei einem nachfolgenden Verschlüsselungsverfahren des Senders (1) und Entschlüsselungsverfahren des Empfängers (5) zur Berechnung eines neuen Schlüssels (S) mittels der öffentlichen Matrix (M) verwendet wird.

11. Vorrichtung zum Verschlüsseln von Daten mittels eines Verfahrens nach einem der Ansprüche 1 bis 5, mit
einer Schlüsselberechnungseinrichtung (2) zum Berechnen eines Schlüsselvektors (S) einer großen zweiten Länge (r) aus einem Schlüsselinformationsvektor (SI) einer kleinen ersten Länge (p) und einer Matrix (M), und
einer ersten Verschlüsselungseinrichtung (3) zum Aufnehmen des Schlüsselvektors (S) und eines Datenvektors (D) einer dritten Länge (I), die kleiner oder gleich der großen zweiten Länge (r) ist, und Ausgeben eines Chiffrevektors (C) der großen Länge (r),
wobei
die erste Länge (p) des Schlüsselinformationsvektors (SI) kleiner als die zweite Länge (r) des Schlüsselvektors (S) ist,
die Matrix (M) öffentlich ist,
die Matrix (M) eine Höhe und Breite der ersten und zweiten Länge (r, p) mit kleinen Matrixvektoren (V1) der kleinen ersten Länge (p) und großen Matrixvektoren (V2) der großen zweiten Länge (r) aufweist, deren Elemente (Mᵢⱼ) zufällig erzeugte Bits sind, und
durch den Schlüsselinformationsvektor (SI) festgelegt wird, welche der großen Matrixvektoren (V2) für die Ermittlung des Schlüsselvektors (S) verwendet werden, indem die kleinen Matrixvektoren (V1) bitweise mit dem Schlüssetinformationsvektor (SI) multipliziert werden und aus den durch diese Multiplikationen gebildeten Werten durch eine EXKLUSIV-ODER-Verknüpfung die Stellen des Schlüsselvektors (S) gebildet werden.

12. Vorrichtung nach Anspruch 11, **dadurch gekennzeichnet, dass** sie eine zweite Verschlüsselungseinrichtung (4) zum Verschlüsseln des Schlüsselinformationsvektors (SI), vorzugsweise mittels eines öffentlichen Schlüssels (K1), aufweist.

13. Vorrichtung nach Anspruch 11 oder 12 zum Durchführen eines Verfahrens nach Anspruch 6 oder 7, **dadurch gekennzeichnet, dass** die erste Verschlüsselungseinrichtung (3) eine Parallelrecheneinrichtung zur parallelen Berechnung der Elemente des Schlüsselvektors (S) aufweist.

14. Vorrichtung zum Entschlüsseln von Chiffrierdaten mittels eines Verfahrens nach Anspruch 6 oder 7, mit
einer Schlüsselberechnungseinrichtung (7) zum Berechnen des Schlüsselvektors (S) einer großen zweiten Länge aus einem Schlüsselinformationsvektor (SI) einer kleinen ersten Länge und einer Matrix (M), und
einer Entschlüsselungseinrichtung (8) zur Aufnahme eines Chiffrevektors (C) der großen zweiten Länge (r) und des Schlüsselvektors (S) und Ausgabe eines Datenvektors (D) der großen zweiten Länge (r),
wobei
die erste Länge (p) des Schlüsselinformationsvektors (SI) kleiner als die zweite Länge (r) des Schlüsselvektors (S) ist,
die Matrix (M) öffentlich ist,
die Matrix (M) eine Höhe und Breite der ersten und zweiten Länge (r, p) mit kleinen Matrixvektoren (V1) der kleinen ersten Länge (p) und großen Matrixvektoren (V2) der großen zweiten Länge (r) aufweist, deren Elemente (Mᵢⱼ) zufällig erzeugte Bits sind, und
durch den Schlüsselinformationsvektor (SI) festgelegt wird, welche der großen Matrixvektoren (V2) für die Ermittlung des Schlüsselvektors (S) verwendet werden, indem die kleinen Matrixvektoren (V1) bitweise mit dem Schlüsselinformationsvektor (SI) multipliziert werden und aus den durch diese Multiplikationen gebildeten Werten durch eine EXKLUSIV-ODER-Verknüpfung die Stellen des Schlüsselvektors (S) gebildet werden.

15. Vorrichtung nach Anspruch 14, **dadurch gekennzeichnet, dass** sie eine zweite Entschlüsselungseinrichtung (6) zur Aufnahme eines verschlüsselten Schlüsselinformationsvektors (CSI) und eines privaten Schlüssels (K2) und Ausgabe des Schlüsselinformationsvektors (SI) aufweist.

16. Chiffresignal, das ein oder mehrere Chiffrevektoren (V) enthält, die durch ein Verfahren nach einem der Ansprüche 1 bis 5 hergestellt sind.

17. Computerprogramm, das computerausführbare Anweisungen zum Durchführen eines Verfahrens nach einem der Ansprüche 1 bis 5 oder nach einem der Ansprüche 6 bis 7 auf einem Computer aufweist.

## Claims

1. Method for the encryption of data in which
a key vector (S) with a long second length (r) is generated from a secret key information vector (SI) with a short first length (p) and a matrix (M), and
an encryption vector (C) is formed from a data vector (D) with a third length (1), which is shorter than or equal to the second length (r), and the key vector (S) by means of a first encryption method,
wherein
the first length (p) of the key information vector (SI) is shorter than the second length (r) of the key vector (S),
the matrix (M) is public,
the matrix (M) has a height and width of the first and second length (r, p) comprising small matrix vectors (V1) with the short first length (p) and large matrix vectors (V2) with the long second length (r), whose elements (Mᵢⱼ) are randomly generated bits, and
the key information vector specifies which of the large matrix vectors (V2) is to be used for determining the key vector (S), by multiplying the small matrix vectors (V1) bit by bit with the key information vector (SI) and by forming the digits of the key vector (S) from the values created by these multiplications by way of an XOR link.

2. Method according to claim 1, **characterized in that** the small matrix vectors (V1), preferably also the large matrix vectors (V2), are not identical and not equal to zero.

3. Method according to one of the preceding claims, **characterized in that** the first encryption method is a symmetric encryption method, preferably a stream encryption method, in which the elements of the key vector (S) and the data vector (D) are interlinked.

4. Method according to claim 3, **characterized in that** in the first encryption method one element of the encryption vector (C) is determined from one element of the key vector (S) and one element of the data vector (D) by way of an XOR link.

5. Method according to one of the preceding claims, **characterized in that** the key information vector (SI) is encrypted by means of a second encryption method, preferably an asymmetric encryption method, e.g. an RSA method.

6. Method for decryption of encrypted data, which have been formed by a method according to one of the preceding claims, in which
a key vector (S) with a second length (r) is formed from a key information vector (SI) with a first length (p) and a matrix (M), and a data vector (D) with the long second length (r) is formed from an encryption vector (C) with the long second length (r) and the key vector (S) by means of a first decryption method,
wherein
the first length (p) of the key information vector (SI) is shorter than the second length (r) of the key vector (S),
the matrix (M) is public,
the matrix (M) has a height and width of the first and second length (r, p) comprising small matrix vectors (V1) with the short first length (p) and long matrix vectors (V2) with the long second length (r), whose elements (Mᵢⱼ) are randomly generated bits, and the key information vector (SI) specifies which of the large matrix vectors (V2) is to be used for determining the key vector (S) by multiplying the short matrix vectors (V1) bit by bit with the key information vector (SI) and by forming the digits of the key vector (S) from the values created by these multiplications by way of an XOR link.

7. Method according to claim 6, **characterized in that** the first decryption method corresponds to the first encryption method and contains a link between the elements of the key vector (S) and the encryption vector (C) by way of an XOR link resulting to the elements of the data vector (D).

8. Method for the encrypted transmission of data from a transmitter (1) to a receiver (5) in which
the transmitter (1) generates encryption vectors (C) from data vectors (D), a key information vector (SI) and a public matrix (M) by way of a method according to one of the claims 1-5,
the encryption vectors (C) and the key information vector (SI) are sent to a receiver (5), and
the receiver (5) decrypts the encryption vectors (C) from the public matrix (M) and the key information vector (SI) by means of a method according to claim 6 or 7.

9. Method according to claim 8, **characterized in that** the key information vector (SI) is encrypted by the transmitter by means of a public key (K1), e.g. an asymmetric encryption method, and the encrypted key information vector (CSI) is sent to the receiver (5), and the receiver (5) obtains the key information vector (SI) from the encrypted key information vector (CSI) by means of a private key (K2) from the encrypted key information signals (CSI).

10. Method according to claim 8 or 9, **characterized in that** the data vectors (D) transmitted contain a second key information vector (SI₂) that is used to calculate a new key (S) by means of the public matrix (M) in a subsequent encryption method of the transmitter (1) and decryption method of the receiver (5).

11. Device for encryption of data by means of a method according to one of the claims 1-5 with
a key calculation device (2) for calculating a key vector (S) with a long second length (r) from a key information vector (SI) with a short first length (p) and a matrix (M), and
a first encryption device (3) for recording the key vector (S) and a data vector (D) with a third length (1), which is less than or equal to the long length (r), and supplying an encryption vector (C) with the long length (r),
wherein
the first length (p) of the key information vector (SI) is shorter than the second length (r) of the key vector (S),
the matrix (M) is public,
the matrix (M) has a height and width of the first and second length (r, p) comprising small matrix vectors (V1) with the short first length (p) and long matrix vectors (V2) with the long second length (r), whose elements (Mᵢⱼ) are randomly generated bits, and
the key information vector (SI) specifies which of the large matrix vectors (V2) is to be used for determining the key vector (S) by multiplying the small matrix vectors (V1) bit by bit with the key information vector (SI) and by forming the digits of the key vector (S) from the values created by these multiplications by way of an XOR link.

12. Device according to claim 11, **characterized in that** it has a second encryption device (4) for encrypting the key information vector (SI), preferably by means of a public key (K1) .

13. Device according to claim 11 or 12 for executing a method according to claim 6 or 7, **characterized in that** the first encryption device (3) contains a parallel computation device for the parallel calculation of the elements of the key vector (S).

14. Device for decryption of encrypted data by means of a method according to claim 6 or 7, with
a key calculation device (7) for calculating the key vector (S) with a long second length from a key information vector (SI) with a short first length and a matrix (M), and
a decryption device (8) for recording an encryption vector (C) with the long second length (r) and the key vector (S) and for supplying a data vector (D) with the long second length (r),
wherein
the first length (p) of the key information vector (SI) is shorter than the second length (r) of the key vector (S),
the matrix (M) is public,
the matrix (M) has a height and width of the first and second length (r, p) comprising short matrix vectors (V1) with the short first length (p) and long matrix vectors (V2) with the long second length (r), whose elements (Mᵢⱼ) are randomly generated bits, and
the key information vector (SI) specifies which of the long matrix vectors (V2) is to be used for determining the key vector (S) by multiplying the small matrix vectors (V1) bit by bit with the key information vector (SI) and by forming the digits of the key vector (S) from the values created by these multiplications by way of an XOR link.

15. Device according to claim 14, **characterized in that** it has a second decryption device (6) for recording a encrypted key information vector (CSI) and a private key (K2) and for supplying the key information vector (SI).

16. Encryption signal comprising one or more encryption vectors (V) produced by a method according to one of the claims 1-5.

17. Computer program comprising computer-executable instructions for executing a method according to one of the claims 1 to 5 or according to one of the claims 6 to 7 on a computer.

## Revendications

1. Procédé pour le cryptage de données, dans lequel,
à partir d'un vecteur d'information de clé (SI) secret d'une première longueur (p) et d'une matrice (M), un vecteur de clé (S) d'une seconde longueur (r) est généré, et
à partir d'un vecteur de données (D) d'une troisième longueur (1), qui est inférieure ou égale à la seconde longueur (r), et du vecteur de clé (S), un vecteur de chiffre (C) est formé au moyen d'un premier procédé de cryptage,
la première longueur (p) du vecteur d'information de clé (SI) étant inférieure à la seconde longueur (r) du vecteur de clé (S),
la matrice (M) étant publique,
la matrice (M) présente une hauteur et une largeur des première et seconde longueurs (r, p) avec de petits vecteurs de matrice (V1) de la petite première longueur (p) et avec de grands vecteurs de matrice (V2) de la grande seconde longueur (r), dont les éléments (Mᵢⱼ) sont des bits générés de façon aléatoire, et
on définit par le vecteur d'information de clé (SI) lesquels des grands vecteurs de matrice (V2) sont utilisés pour déterminer le vecteur de clé (S), en multipliant les petits vecteurs de matrice (V1), bit par bit, par le vecteur d'information de clé (S1) et, à partir des valeurs obtenues par ces multiplications, les positions du vecteur de clé (S) sont formées au moyen d'une relation OU EXCLUSIF.

2. Procédé selon la revendication 1, **caractérisé en ce que** les petits vecteurs de matrice (V1), de préférence également les grands vecteurs de matrice (V2), sont inégaux et différents de zéro.

3. Procédé selon l'une des revendications précédentes, **caractérisé en ce que** le premier procédé de cryptage est un procédé de cryptage symétrique, de préférence un procédé de chiffrage de flux, dans lequel les éléments du vecteur de clé (S) et du vecteur de données (D) sont reliés entre eux.

4. Procédé selon la revendication 3, **caractérisé en ce que**, dans le premier procédé de cryptage, un élément du vecteur de chiffre (C) est déterminé à partir de respectivement un élément du vecteur de clé (S) et du vecteur de données (D) par une relation OU EXCLUSIF.

5. Procédé selon l'une des revendications précédentes, **caractérisé en ce que** le vecteur d'information de clé (SI) est crypté par un second procédé de cryptage, de préférence un procédé de cryptage asymétrique, par exemple un procédé RSA.

6. Procédé pour le décryptage de données de chiffrage, qui ont été formées par un procédé selon l'une des revendications précédentes, dans lequel un vecteur de clé (S) d'une seconde longueur (r) est formé à partir d'un vecteur d'information de clé (SI) d'une première longueur (p) et d'une matrice (M), et un vecteur de données (D) de la grande seconde longueur (r) est formé à partir d'un vecteur de chiffre (C) de la grande seconde longueur (r) et du vecteur de clé (S) au moyen d'un premier procédé de décryptage,
la première longueur (p) du vecteur d'information de clé (SI) étant inférieure à la seconde longueur (r) du vecteur de clé (S),
la matrice (M) étant publique,
la matrice (M) présentant une hauteur et une largeur des première et seconde longueurs (r, p) avec de petits vecteurs de matrice (V1) de la petite première longueur (p) et avec de grands vecteurs de matrice (V2) de la grande seconde longueur (r), dont les éléments (Mᵢⱼ) sont des bits générés de façon aléatoire, et
on définit par le vecteur d'information de clé (SI) lesquels des grands vecteurs de matrice (V2) sont utilisés pour déterminer le vecteur de clé (S), en multipliant les petits vecteurs de matrice (V1), bit par bit, par le vecteur d'information de clé (SI) et, à partir des valeurs obtenues par ces multiplications, les positions du vecteur de clé (S) sont formées au moyen d'une relation OU EXCLUSIF.

7. Procédé selon la revendication 6, **caractérisé en ce que** le premier procédé de décryptage correspond au premier procédé de cryptage et contient une liaison des éléments du vecteur de clé (S) et du vecteur de chiffre (C) au moyen d'une relation OU EXCLUSIF avec les éléments du vecteur de données (D).

8. Procédé pour la transmission cryptée de données d'un émetteur (1) à un récepteur (5), dans lequel
l'émetteur (1) génère à partir de vecteurs de données (D), d'un vecteur d'information de clé (SI) et d'une matrice (M) publique des vecteurs de chiffre (C) par un procédé selon l'une des revendications 1 à 5,
les vecteurs de chiffre (C) et le vecteur d'information de clé (SI) sont transmis à un récepteur (5), et
le récepteur (5) décrypte les vecteurs de chiffre (C) à partir de la matrice (M) publique et du vecteur d'information de clé (SI) par un procédé selon la revendication 6 ou 7.

9. Procédé selon la revendication 8, **caractérisé en ce que** le vecteur d'information de clé (SI) est crypté par l'émetteur au moyen d'une clé (K1) publique, par exemple un procédé de cryptage asymétrique, et le vecteur d'informations de clé crypté est transmis au récepteur (5), et le récepteur (5), à partir du vecteur d'information de clé crypté (CSI), au moyen d'une clé privée (K2), extrait le vecteur d'information de clé (SI) des signaux d'information de signal (CSi) cryptés.

10. Procédé selon la revendication 8 ou 9, **caractérisé en ce que** les vecteurs de données (D) transmis contiennent un second vecteur d'information de clé (SI₂), qui est utilisé dans un procédé successif de cryptage de l'émetteur (1) et de décryptage du récepteur (5), pour le calcul d'une nouvelle clé (S) au moyen de la matrice (M) publique.

11. Dispositif pour le décryptage de données au moyen d'un procédé selon l'une des revendications 1 à 5 comprenant
un dispositif de calcul de clé (2) pour le calcul d'un vecteur de clé (S) d'une grande seconde longueur (r) à partir d'un vecteur d'information de clé (SI) d'une petite première longueur (p) et d'une matrice (M), et
un premier dispositif de cryptage (3) pour la réception du vecteur de clé (S) et d'un vecteur de données (D) d'une troisième longueur (1) qui est inférieure ou égale à la grande seconde longueur (r), et pour l'émission d'un vecteur de chiffre (C) de la grande longueur (r),
la première longueur (p) du vecteur d'information de clé (SI) étant inférieure à la seconde longueur (r) du vecteur de clé (S),
la matrice (M) étant publique,
la matrice (M) présentant une hauteur et une largeur des première et seconde longueurs (r, p) avec de petits vecteurs de matrice (V1) de la petite première longueur (p) et de grands vecteurs de matrice (V2) de la grande seconde longueur (r), dont les éléments (Mᵢⱼ) sont des bits générés de façon aléatoire, et
on définit par le vecteur d'information de clé (SI) lesquels des grands vecteurs de matrice (V2) sont utilisés pour déterminer le vecteur de clé (S) en multipliant les petits vecteurs de matrice (V1), bit par bit, par le vecteur d'information de clé (SI) et, à partir des valeurs obtenues par ces multiplications, les positions du vecteur de clé (S) sont formées au moyen d'une relation OU EXCLUSIF.

12. Dispositif selon la revendication 11, **caractérisé en ce qu'**il présente un second dispositif de cryptage (4) pour le cryptage du vecteur d'information de clé (SI), de préférence au moyen d'une clé (K1) publique.

13. Dispositif selon la revendication 11 ou 12 pour la mise en oeuvre d'un procédé selon la revendication 6 ou 7, **caractérisé en ce que** le premier dispositif de cryptage (3) présente un dispositif de calcul parallèle pour le calcul parallèle des éléments du vecteur de clé (S).

14. Dispositif pour le décryptage de données de chiffrage au moyen d'un procédé selon la revendication 6 ou 7, comprenant
un dispositif de calcul de clé (7) pour le calcul du vecteur de clé (S) d'une grande seconde longueur à partir d'un vecteur d'information de clé (SI) d'une petite première longueur et d'une matrice (M), et
un dispositif de décryptage (8) pour la réception d'un vecteur de chiffre (C) de la grande seconde longueur (r) et du vecteur de clé (S) et l'émission d'un vecteur de données (D) de la grande seconde longueur (r),
la première longueur (p) du vecteur d'information de clé (SI) étant inférieure à la seconde longueur (r) du vecteur de clé (S),
la matrice (M) étant publique,
la matrice (M) présentant une hauteur et une largeur des première et seconde longueurs (r, p) avec de petits vecteurs de matrice (V1) de la petite première longueur (p) et de grands vecteurs de matrice (V2) de la grande seconde longueur (r), dont les éléments (Mᵢⱼ) sont des bits générés de façon aléatoire, et
on définit par le vecteur d'information de clé (SI) lesquels des grands vecteurs de matrice (V2) sont utilisés pour déterminer le vecteur de clé (S), en multipliant les petits vecteurs de matrice (V1), bit par bit, par le vecteur d'information de clé (SI) et, à partir des valeurs obtenues par ces multiplications, les positions du vecteur de clé (S) sont formées au moyen d'une relation OU EXCLUSIF.

15. Dispositif selon la revendication 14, **caractérisé en ce qu'**il présente un second dispositif de décryptage (6) pour la réception d'un vecteur d'information de clé (CSI) crypté et d'une clé (K2) privée et l'émission du vecteur d'information de clé (SI).

16. Signal de chiffre, qui contient un ou plusieurs vecteurs de chiffre (V), qui sont élaborés par un procédé selon l'une des revendications 1 à 5.

17. Programme informatique, qui présente des instructions pouvant être exécutées par l'ordinateur pour la mise en oeuvre d'un procédé selon l'une des revendications 1 à 5 ou selon l'une des revendications 6 à 7 sur un ordinateur.
